# EUROPEAN PATENT APPLICATION

(11) **EP 4 707 057 A1**
(43) Date of publication of application: **11.03.2026**
(21) Application number: 24929404.2
(22) Date of filing: 28.11.2024
(51) Int. Cl.: B60L 53/31, B60L 53/35

(54) **CHARGING SYSTEM**

(30) Priority: 17.06.2024 CN 202421383007 U
(71) Applicant: CONTEMPORARY AMPEREX TECHNOLOGY (HONG KONG) LIMITED, Hong Kong (HK)
(72) Inventor: LIN, Jiubiao, Ningde, Fujian 352100 (CN); XU, Jinmei, Ningde, Fujian 352100 (CN); WANG, Zhichao, Ningde, Fujian 352100 (CN)
(74) Representative: Ran, Handong
(86) International application number: PCT/CN2024/135272
(87) International publication number: WO 2025/260618

(57) **Abstract**

The present application discloses a charging system (100), wherein the charging system (100) is used for providing charging service for a plurality of fixed parking spaces, and the system (100) comprises: a charging pile (10), the charging pile (10) being provided with a power supply input interface (11); a plurality of power supply interfaces (20), the plurality of power supply interfaces (20) being arranged in one-to-one correspondence with the plurality of fixed parking spaces; a power supply apparatus (30), configured to output charging electric energy to the plurality of power supply interfaces (20) based on the electric energy of a plurality of power supply sources (200); wherein when the charging pile (10) moves to a target power supply interface and the power supply input interface (11) of the charging pile is connected to the target power supply interface, or the power supply input interface (11) of the charging pile telescopes to the target power supply interface and is connected to the target power supply interface, the charging pile (10) charges a vehicle in the target parking space corresponding to the target power supply interface based on the charging electric energy.

## Description

### CROSS-REFERENCE TO RELATED APPLICATIONS

The present disclosure claims priority to Chinese Patent Application No. 202421383007.1 entitled "CHARGING SYSTEM" and filed on June 17, 2024, which is incorporated herein by reference in its entirety.

### TECHNICAL FIELD

The present application relates to the field of charging technology, and in particular, to a charging system.

### BACKGROUND

At present, in the electric vehicle charging station, an installation solution of one parking space being configured with one charging pile is adopted. This installation solution results in high initial investment costs for charging stations. In actual applications, the utilization rate of charging piles is low and the actual idle rate is high, resulting in a long investment recovery period and failure to make quick profits.

### SUMMARY OF THE INVENTION

In view of the above problems, the present application provides a charging system, which can meet the charging demand of vehicles in different parking spaces based on charging piles, reduce the number of charging piles installed, and reduce costs, and at the same time can meet the charging power demand in different scenarios based on a plurality of power supply sources and ensure the vehicle charging effect.

The present application provides a charging system for providing charging service for a plurality of fixed parking spaces, which comprises: a charging pile, provided with a power supply input interface; a plurality of power supply interfaces, arranged in one-to-one correspondence with the plurality of fixed parking spaces; a power supply apparatus, connected to the plurality of power supply interfaces and a plurality of power supply sources, and configured to output charging electric energy to the plurality of power supply interfaces based on the electric energy of the plurality of power supply sources; wherein when the charging pile moves to a target power supply interface and the power supply input interface of the charging pile is connected to the target power supply interface, or the power supply input interface of the charging pile telescopes to the target power supply interface and is connected to the target power supply interface, the charging pile charges a vehicle in the target parking space corresponding to the target power supply interface based on the charging electric energy.

In the technical solution of the embodiment of the present application, a plurality of power supply interfaces are arranged in one-to-one correspondence with a plurality of fixed parking spaces, and the plurality of power supply interfaces are connected to a plurality of power supply sources through a power supply apparatus. When a vehicle in the target fixed parking space has a charging demand, the charging pile is moved to the target power supply interface corresponding to the target fixed parking space, or the power supply input interface of the charging pile telescopes to the target power supply interface. At this time, the vehicle owner connects the power supply input interface of the charging pile to the target power supply interface, and connects the power supply output interface of the charging pile, i.e., the charging gun, to the charging port of the vehicle to charge the vehicle. During the charging process of the vehicle, a plurality of power supply sources establish a charging loop with the vehicle through the power supply apparatus, the target power supply interface and the charging pile, so as to charge the vehicle. In this way, the charging demand of vehicles in different parking spaces can be met based on the charging pile, which reduces the number of charging piles installed, and reduces costs. At the same time, the electric energy based on a plurality of power supply sources can meet the charging demand in different scenarios, providing a guarantee for the charging effect of the vehicle.

In some embodiments, the plurality of power supply sources include at least two of an AC power grid, an energy storage system, and a new energy power generation system. Therefore, using two or three of the AC power grid, the energy storage system and the new energy power generation system as the power supply source in the charging system can meet the charging demand in different scenarios and provide a guarantee for the charging effect of the vehicle.

In some embodiments, when the plurality of power supply sources include the AC power grid, the energy storage system and the new energy power generation system, the power supply apparatus comprises: a first power conversion unit, one end of the first power conversion unit being connected to the AC power grid; a second power conversion unit, one end of the second power conversion unit being connected to the other end of the first power conversion unit, the energy storage system and the new energy power generation system, and the other end of the second power conversion unit being connected to the plurality of power supply interfaces; wherein the charging electric energy is output through the first power conversion unit and the second power conversion unit based on the electric energy of the AC power grid, the energy storage system and the new energy power generation system.

The first power conversion unit is used to convert the AC power provided by the AC power grid into DC power, and the second power conversion unit is used to convert the DC power provided by the first power conversion unit, the new energy power generation system, and the energy storage system into target DC power to output to provide charging electric energy to the plurality of power supply interfaces. Thus, the electric energy from the AC power grid, the energy storage system and the new energy power generation system is converted to output charging electric energy through the first power conversion unit and the second power conversion unit to meet the charging demand in different scenarios and provide a guarantee for the charging effect of the vehicle.

In some embodiments, the first power conversion unit is a unidirectional ACDC (alternating current-direct current) conversion unit or a bidirectional ACDC conversion unit; and/or, the second power conversion unit is a unidirectional DCDC (direct current-direct current) conversion unit or a bidirectional DCDC conversion unit. In this way, unidirectional flow, bidirectional flow or partial bidirectional flow of energy can be achieved, which can be suitable for energy requirements in different application scenarios.

In some embodiments, the power supply input interface and the power supply interface are connected in a plug-in manner, which makes the connection between the power supply input interface and the power supply interface more convenient and reliable, and solves the problem of failure to meet the high-power charging demand of electric vehicles due to high docking difficulty and high contact resistance when the positive and negative electrodes of the charging pile and the power supply source are directly docked.

In some embodiments, the power supply input interface is a plug, and the power supply interface is a socket; or, the power supply input interface is a socket, and the power supply interface is a plug. In this way, the power supply input interface and the power supply interface are connected in a plug-in manner, which makes the connection between the power supply input interface and the power supply interface more convenient and reliable, and solves the problem of failure to meet the high-power charging demand of electric vehicles due to high docking difficulty and high contact resistance when the positive and negative electrodes of the charging pile and the power supply source are directly docked.

In some embodiments, the charging system further comprises: a plurality of trigger members, wherein the plurality of trigger members are arranged in one-to-one correspondence with the plurality of fixed parking spaces, the plurality of trigger members are configured to trigger the charging piles to move to their respective corresponding power supply interfaces; or, configured to trigger the power supply input interfaces of the charging piles to telescope to their respective corresponding power supply interfaces.

In the charging system, the trigger member, the fixed parking space, and the power supply interface are arranged in one-to-one correspondence. When charging is needed, the trigger member is controlled to act to send a trigger signal to the charging pile. The charging pile can determine the target position based on the received trigger signal and move to the target position, or control the power supply input interface to telescope to the target position. Then the vehicle owner connects the power supply input interface of the charging pile to the power supply interface at the target position, and connects the power supply input interface of the charging pile with the charging port of the vehicle to charge the vehicle. The charging pile can, based on the state of the plurality of trigger members, automatically move or control its own power supply input interface to achieve automatic telescoping, making the charging process more convenient.

In some embodiments, the trigger member is a parking space information identifier that includes parking space information, the charging pile is also communicatively connected to a terminal device, the terminal device is configured to acquire the parking space information based on the parking space information identifier, and the charging pile is further configured to automatically move to the target power supply interface based on the parking space information of the target parking space sent by the terminal device; or, the charging pile is further configured to control its own power supply input interface to telescope to the target power supply interface based on the parking space information of the target parking space sent by the terminal device.

The parking space information of the target parking space is obtained by identifying the parking space information identifier of the target parking space through the terminal device, and the parking space information of the target parking space is sent to the charging pile based on wireless communication. The charging pile can automatically move to the target power supply interface of the target parking space according to the received parking space information of the target parking space, or control its own power supply input interface to telescope to the target power supply interface, making the charging process more convenient.

In some embodiments, the parking space information identifier is a barcode or a QR code. In this way, the terminal device can scan the barcode or QR code of the target parking space to acquire the parking space information of the target parking space, and send the parking space information of the target parking space to the charging pile based on wireless communication, so that the charging pile can automatically move to the target power supply interface according to the received parking space information, or control its own power supply input interface to telescope to the target power supply interface, making the charging process more convenient.

In some embodiments, the trigger member is a parking space switch, the parking space switch is connected to the charging pile, and the charging pile is further configured to automatically move to the target power supply interface when the state of the parking space switch corresponding to the target parking space is the target state; or, the charging pile is further configured to control its own power supply input interface to telescope to the target power supply interface when the state of the parking space switch corresponding to the target parking space is the target state.

The parking space switch and the charging pile can be connected in a wired or wireless manner. For example, when the parking space switch is a mechanical switch, the mechanical switch is arranged on one side of the corresponding fixed parking space, and the state of the mechanical switch is transmitted to the charging pile in a wired manner; when the parking space switch is an electronic switch, such as a pressure sensor, infrared sensor, the vehicle in the corresponding parking space is detected through the electronic switch, and the detection result is sent to the charging pile in a wired or wireless manner. When the charging pile identifies that the state of the parking space switch is the target state, it takes the fixed parking space corresponding to the parking space switch in the target state as the target parking space, and automatically moves to the target power supply interface corresponding to the target parking space, or controls its own power supply input interface to telescope to the target power supply interface, making the charging process more convenient.

In some embodiments, the parking space switch includes at least one of a mechanical switch, a pressure sensor, and an infrared sensor. When the charging pile identifies that the state of the parking space switch is the target state, it determines the target parking space based on the parking space switch, and automatically moves to the target power supply interface corresponding to the target parking space, or controls its own power supply input interface to telescope to the target power supply interface, making the charging process more convenient.

In some embodiments, the charging pile is also provided with a sensing apparatus and a moving apparatus, and the charging pile is further configured to, based on the surrounding environment information sensed by the sensing apparatus, control the moving apparatus to automatically move to the target power supply interface; or, the charging pile is also provided with a sensing apparatus and a telescopic apparatus, and the charging pile is further configured to, based on the surrounding environment information sensed by the sensing apparatus, control the telescopic apparatus to drive the power supply input interface to telescope to the target power supply interface. The charging pile can automatically move to the target power supply interface through the sensing apparatus and the moving apparatus, or the charging pile controls its own power supply input interface to telescope to the target power supply interface based on the sensing apparatus and the telescopic apparatus, without the need for manual operation, making the charging process more convenient.

In some embodiments, the charging system further comprises: a moving route identifier, wherein a plurality of pile position identifiers are provided on the moving route identifier, the plurality of pile position identifiers are arranged in one-to-one correspondence with the plurality of power supply interfaces, and the charging pile is further configured to control the moving apparatus to automatically move to the target pile position identifier corresponding to the target power supply interface based on the surrounding environment information sensed by the sensing apparatus; or, the charging pile is further configured to control the telescopic apparatus to drive the power supply input interface to telescope to the target pile position identifier corresponding to the target power supply interface based on the surrounding environment information sensed by the sensing apparatus. Based on the moving route identifier, the charging pile can quickly move to the target power supply interface, or control its own power supply input interface to quickly telescope to the target power supply interface, which not only improves the moving speed but also does not require the laying of guide rails, saving costs.

In some embodiments, the number of the charging piles is greater than 1 and less than the number of the plurality of fixed parking spaces. In this way, a plurality of vehicles can be charged at the same time through a plurality of charging piles, meeting the demand of charging a plurality of vehicles at the same time.

The above description is only an overview of the technical solution of the present application. In order to better understand the technical means of the present application and thus implement them according to the contents of the specification, and in order to make the above and other objectives, features and advantages of the present application more obvious and understandable, the detailed description of the present application is given below.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
Fig. 1 is a first schematic diagram showing the connection of a charging system according to some embodiments of the present application;
Fig. 2 is a second schematic diagram showing the connection of a charging system according to some embodiments of the present application;
Fig. 3 is a third schematic diagram showing the connection of a charging system according to some embodiments of the present application;
Fig. 4 is a schematic structural diagram of a charging pile according to some embodiments of the present application;
Fig. 5 is a scenario schematic diagram of a charging system in a state of not charging according to some embodiments of the present application;
FIG. 6 is a scenario schematic diagram of a charging system in a state of charging according to some embodiments of the present application.

### Reference numerals:

Charging system 100, charging pile 10, power supply input interface 11, power supply output interface 12, sensing apparatus 13, moving apparatus 14, power supply interface 20, power supply apparatus 30, first power conversion unit 31, second power conversion unit 32, trigger member 40, moving route identifier 50, power supply source 200.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "a plurality of groups" refers to two or more (including two) groups, and "a plurality of sheets" refers to two or more (including two) sheets.

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, in the electric vehicle charging station, an installation solution of one parking space being configured with one charging pile is adopted. This installation solution results in high initial investment costs for charging stations. In actual applications, the utilization rate of charging piles is low and the actual idle rate is high, resulting in a long investment recovery period and failure to make quick profits.

In the related art, charging service is provided to a plurality of fixed parking spaces through a track-type charging pile. The charging pile comprises a charging pile body, the charging pile body is arranged on a bottom plate, and a charging gun is arranged on the charging pile body. The charging pile further comprises a guide rail bracket, the guide rail bracket is provided with guide rails, and the guide rails communicate with each other. A power supply source rack is arranged at the end of the corresponding guide rail above each fixed parking space, a positive block of power supply source and a negative block of power supply source are arranged on the inner side of the power supply source rack; the charging pile body is arranged above the guide rail, a roller that can roll along the guide rail is arranged at the bottom of the bottom plate, a positive electrode connection block that can be electrically connected to the positive block of power supply source and a negative electrode connection block that can be electrically connected to the negative block of power supply source are arranged on the charging pile body. This technical solution has the effect of one charging pile being in correspondence with to a plurality of parking spaces, reducing the phenomenon of a large number of idle charging piles. It also has the advantage of intelligent control, making the entire charging process more convenient and safe.

However, this technical solution uses a solution where the positive and negative electrodes of the charging pile and the power source at the parking space are directly docked, which makes automated connection difficult and cannot meet the need of high-power charging of existing electric vehicles. At the same time, the exposed positive and negative electrodes have a high safety risk and cannot be promoted and applied in practice. In addition, there is only one charging pile, which cannot meet the charging demand of a plurality of vehicles at the same time.

In order to solve at least one of the above technical problems, the present application provides a charging system. In the technical solution of the embodiment of the present application, a plurality of power supply interfaces are arranged in one-to-one correspondence with a plurality of fixed parking spaces, and the plurality of power supply interfaces are connected to a plurality of power supply sources through a power supply apparatus. When a vehicle in the target parking space has a charging demand, the charging pile is moved to the target power supply interface corresponding to the target parking space, or the power supply input interface of the charging pile telescopes to the target power supply interface corresponding to the target parking space. Then, the vehicle owner connects the power supply input interface of the charging pile to the target power supply interface, and connects the power supply output interface of the charging pile, i.e., the charging gun, to the charging port of the vehicle. At this time, the plurality of power supply sources establish a charging loop with the vehicle through the power supply apparatus, the target power supply interface and the charging pile, so as to charge the vehicle. The circuit design based on a plurality of power supply sources can meet the charging power demand in different scenarios and guarantee the charging effect of the vehicle. At the same time, the charging demand of vehicles at different parking spaces can be met based on the charging pile, which reduces the number of charging piles installed and reduces costs.

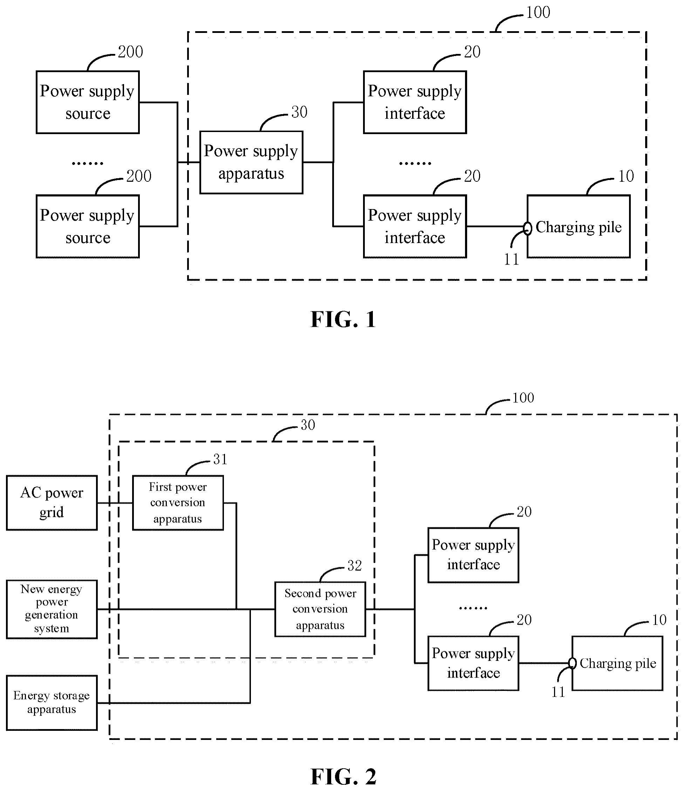

The following embodiments will explain the charging system of the present application with reference to Fig. 1 for convenience of explanation.

As shown in Fig. 1, a charging system 100 of the present application is used to provide charging service to a plurality of fixed parking spaces. The charging system 100 comprises: a charging pile 10 , a plurality of power supply interfaces 20 and a power supply apparatus 30.

The charging pile 10 is provided with a power supply input interface 11. The plurality of power supply interfaces 20 are arranged in one-to-one correspondence with the plurality of fixed parking spaces. The power supply apparatus 30 is connected to the plurality of power supply interfaces 20 and a plurality of power supply sources 200, and the power supply apparatus 30 is configured to output charging electric energy to the plurality of power supply interfaces 20 based on electric energy of the plurality of power supply sources 200. When the charging pile 10 moves to a target power supply interface and the power supply input interface 11 of the charging pile 10 is connected to the target power supply interface, the charging pile 10 charges the vehicle in the target parking space corresponding to the target power supply interface based on the charging electric energy.

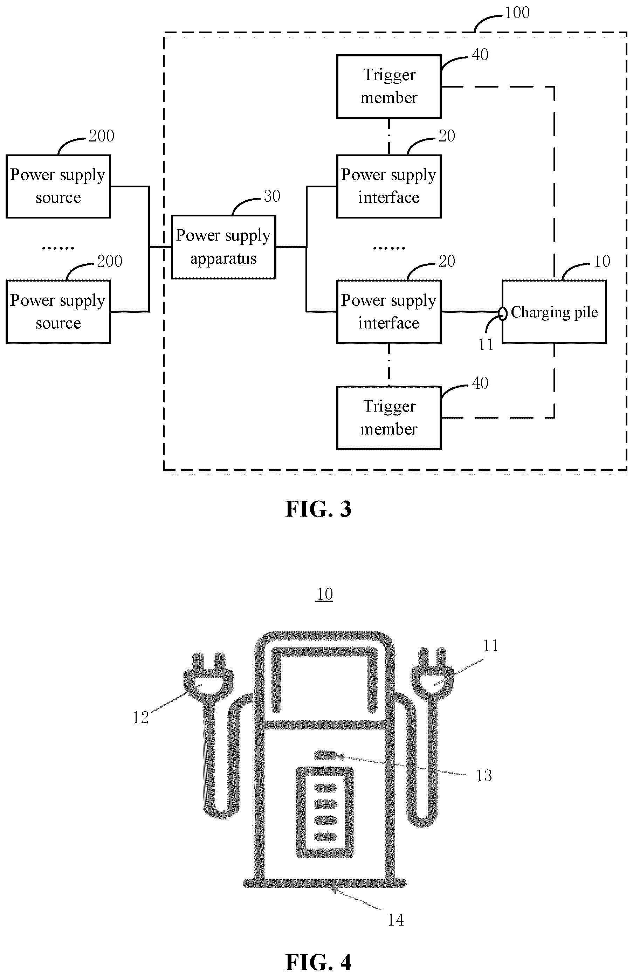

Specifically, the charging pile 10 can be a mobile charging pile, which can be moved as a whole according to demand. It can be moved by manual pushing or can move automatically based on a trigger instruction. Alternatively, only the power supply input interface of the charging pile 10 can telescope and move according to demand. Its telescopic movement can be controlled by manual traction, or it can automatically telescope and move based on a trigger instruction, which is not specifically limited. The charging pile 10 also has a power supply output interface 12 (as shown in Fig. 4 ), such as a charging gun. It is connected to a charging port of a vehicle through the power supply output interface 12 to charge the vehicle. In addition, the charging pile 10 not only has the function of electric energy conversion, such as stepping down the received charging electric energy to output the target voltage to charge the vehicle, but also has functions such as charging monitoring, such as real-time monitoring of vehicle power demand, charging voltage, charging current, charging time and other working parameters during the charging process for charging control.

The power supply interface 20 is arranged in one-to-one correspondence with the fixed parking space. It is arranged near the corresponding fixed parking space, and is used to be connected to the power supply input interface 11 of the charging pile 10. At the same time, the plurality of power supply interfaces 20 are connected to the plurality of power supply sources 200 through the power supply apparatus 30, wherein the power supply source 200 can be an AC power grid, an energy storage system, a photovoltaic system, etc., which is not specifically limited and is used to provide electric energy. The power supply apparatus 30 is an electric energy conversion apparatus, which is used to convert the electric energy provided by the plurality of power supply sources 200 into charging electric energy, and then provide the charging electric energy to the charging pile 10 through the power supply interface 20 to charge vehicles. Additionally, in addition to supplying power to the charging pile 10 through the power supply interface 20, the power supply apparatus 30 also communicates with the charging pile 10 through the power supply interface 20. The communication content may include vehicle power demand, real-time charging operating parameters, etc. Therefore, during the charging process, the power supply apparatus 30 can allocate power based on the vehicle power demand and the current output power of each power supply source 200 to ensure the charging quality.

When a vehicle needs charging, the vehicle owner parks the vehicle in the corresponding fixed parking space. The power supply interface corresponding to the fixed parking space is the target power supply interface. The charging pile 10 moves to the target power supply interface or the power supply input interface 11 of the charging pile 10 telescopes to the target power supply interface. Then the vehicle owner connects the power supply input interface 11 of the charging pile 10 with the target power supply interface, and connects the charging gun of the charging pile 10 with the charging port of the vehicle. At this time, the vehicle establishes a charging loop with the plurality of power supply sources 200 through the charging pile 10, the target power supply interface, and the power supply apparatus 30, and the vehicle is charged through the charging electric energy provided by the plurality of power supply sources 200. During the charging process, the power supply apparatus 30 communicates with the charging pile 10 to obtain the vehicle power demand, and allocates the power of the plurality of power supply sources 200 based on the vehicle power demand to ensure the charging quality.

This embodiment is based on the fact that the charging pile 10 can meet the charging demand of vehicles at different parking spaces, which reduces the number of charging piles installed, and reduce costs. At the same time, it is based on the fact that a plurality of power supply sources can meet the charging kilometer requirements in different scenarios, which is easy to achieve optimal power allocation output, thereby providing a guarantee for the vehicle charging effect.

In some embodiments of the present application, the plurality of power supply sources 200 include at least two of an AC power grid, an energy storage system, and a new energy power generation system.

Specifically, the AC power grid is a network that outputs AC power and is composed of AC output lines and substations. New energy power generation system is a system that uses renewable energy (such as solar energy, wind energy, hydropower) to generate electricity, such as photovoltaic power generation system, wind power generation system. An energy storage system refers to a device system that converts electric energy into chemical energy and stores it inside a battery. It is composed of a plurality of batteries.

The plurality of power supply sources 200 can be composed of two or three of the AC power grid, energy storage system and new energy power generation system. During the charging process, the power supply priority or power allocation strategy of the plurality of power supply sources 200 can be pre-set, and the power supply apparatus 30 performs power allocation during the charging process based on the power supply priority or power allocation strategy.

For example, when the plurality of power supply sources 200 include an AC power grid and an energy storage system, the AC power grid is preferentially selected to provide electric energy. When the output power of the AC power grid cannot meet the power demand of the vehicle, the energy storage system is controlled to provide supplementary power. At this time, the AC power grid and the energy storage system provide power simultaneously.

For another example, when the plurality of power supply sources 200 include an AC power grid and a new energy power generation system, the new energy power generation system is preferentially selected to provide electric energy. When the output power of the new energy power generation system cannot meet the power demand of the vehicle, the AC power grid is controlled to provide supplementary power. At this time, the AC power grid and the new energy power generation system simultaneously provide electric energy for vehicle charging. In addition, when the output power of the new energy power generation system is greater than the power demand of the vehicle, the excess electric energy can also be output to the AC power grid.

For another example, when the plurality of power supply sources 200 include an energy storage system and a new energy power generation system, the new energy power generation system is preferentially selected to provide electric energy. When the output power of the new energy power generation system cannot meet the power demand of the vehicle, the energy storage system is controlled to provide supplementary power. At this time, the energy storage system and the new energy power generation system provide electric energy simultaneously. In addition, when the output power of the new energy power generation system is greater than the vehicle's power demand, the excess electric energy can be output to charge the energy storage system.

For another example, when the plurality of power supply sources 200 include an AC power grid, an energy storage system, and a new energy power generation system, the power supply priorities are, from high to low, as follows: new energy power generation system, AC power grid, and energy storage system, to execute charging power allocation, and the specific control strategy is not limited.

This embodiment uses two or three of the AC power grid, energy storage system and new energy power generation system as the power supply source 200, which can meet the charging demand in different scenarios and guarantee the charging effect of the vehicle.

In some embodiments of the present application, as shown in Fig. 2, when the plurality of power supply sources 200 include the AC power grid, the energy storage system and the new energy power generation system, the power supply apparatus 30 comprises: a first power conversion unit 31, one end of the first power conversion unit 31 being connected to the AC power grid; a second power conversion unit 32, one end of the second power conversion unit 32 being connected to the other end of the first power conversion unit 31, the energy storage system and the new energy power generation system, and the other end of the second power conversion unit 32 being connected to the plurality of power supply interfaces; wherein the charging electric energy is output through the first power conversion unit 31 and the second power conversion unit 32 based on the electric energy of the AC power grid, the energy storage system and the new energy power generation system.

Specifically, the first power conversion unit 31 is used to convert the AC power provided by the AC power grid into DC power, and the second power conversion unit 32 is used to convert the DC power provided by the first power conversion unit 31, the new energy power generation system, and the energy storage system into target DC power to output to provide charging electric energy to the plurality of power supply interfaces 20. In this way, the electric energy from the AC power grid, the energy storage system and the new energy power generation system is converted to output charging electric energy through the first power conversion unit 31 and the second power conversion unit 32 to meet the charging demand in different scenarios and ensure the charging effect of the vehicle.

In some embodiments of the present application, the first power conversion unit 31 is a unidirectional ACDC conversion unit or a bidirectional ACDC conversion unit; and/or, the second power conversion unit 32 is a unidirectional DCDC conversion unit or a bidirectional DCDC conversion unit.

Specifically, when the first power conversion unit 31 is a unidirectional ACDC conversion unit, the AC power provided by the AC power grid can only be converted into DC power to output by the first power conversion unit 31. When the first power conversion unit 31 is a bidirectional ACDC conversion unit, in addition to converting the AC power provided by the AC power grid into DC power to output through the first power conversion unit 31, the first power conversion unit 31 can also convert DC power into AC power and output it to the AC power grid. For example, when the power output by the new energy power generation system is greater than the power required by the vehicle and the energy storage system is already fully charged, while controlling the new energy power generation system to provide electric energy to charge the vehicle, the excess electric energy can be output to the AC power grid through the first power conversion unit 31.

When the second power conversion unit 32 is a unidirectional DCDC conversion unit, electric energy can only be output from the first power conversion unit, the new energy power generation system and the energy storage system to the power supply interface 20 through the second power conversion unit 32 to provide charging electric energy for charging the vehicle. When the second power conversion unit 32 is a bidirectional DCDC conversion unit, bidirectional flow of electric energy between the first power conversion unit, new energy power generation system and energy storage system and the power supply interface 20 can be achieved.

For example, when the power supply apparatus 30 adopts the first power conversion unit 31 as a unidirectional ACDC conversion unit and the second power conversion unit 32 as a unidirectional DCDC conversion unit, at this time, charging electric energy is provided to the power supply interface 20 based on the AC power grid, the energy storage system and the new energy power generation system; when the power supply apparatus 30 adopts the first power conversion unit 31 as a unidirectional ACDC conversion unit and the second power conversion unit 32 as a bidirectional DCDC conversion unit, at this time, in addition to providing charging electric energy to the power supply interface 20 through the AC power grid, the energy storage system and the new energy power generation system, the energy storage system can also be charged by DC power input from the outside; when the power supply apparatus 30 adopts the first power conversion unit 31 as a bidirectional ACDC conversion unit and the second power conversion unit 32 as a bidirectional DCDC conversion unit, in addition to providing charging electric energy to the power supply interface 20 through the AC power grid, the energy storage system and the new energy power generation system, the energy storage system can also be charged by DC power input from the outside, and the new energy power generation system outputs electric energy to the AC power grid, etc., to achieve bidirectional flow of electric energy between the power supply interface 20 and the power supply source 200.

This embodiment can realize unidirectional flow, bidirectional flow or partial bidirectional flow of energy to meet the energy requirements in different application scenarios, thereby improving vehicle charging effect and application flexibility.

In some embodiments of the present application, the power supply input interface 11 and the power supply interface 20 are connected in a plug-in manner.

One of the power supply input interface 11 and the power supply interface 20 is a socket, and the other is a corresponding plug. For example, the power supply input interface 11 is a plug, and the power supply interface 20 is a socket; or, the power supply input interface 11 is a socket, and the power supply interface 20 is a plug, which can be applied according to actual conditions. The power supply input interface 11 and the power supply interface 20 are connected in a plug-in manner, which makes the connection between the power supply input interface 11 and the power supply interface 20 more convenient and reliable, and solves the problems of difficulty in automated docking and failure to meet the high-power charging demand of electric vehicles due to high contact internal resistance in the solution adopted in the prior art where the positive and negative electrodes of the charging pile and the power source at the parking space are directly docked.

In some embodiments of the present application, as shown in Fig. 3, the charging system 100 further comprises: a plurality of trigger members 40, wherein the plurality of trigger members 40 are arranged in one-to-one correspondence with the plurality of fixed parking spaces, the plurality of trigger members 40 are configured to trigger the charging piles 10 to move to their respective corresponding power supply interfaces; or, configured to trigger the power supply input interfaces 11 of the charging piles 10 to telescope to their respective corresponding power supply interfaces.

Specifically, the trigger member 40, the fixed parking space and the power supply interface 20 are arranged in one-to-one correspondence.

The triggering member 40 is used to trigger the charging pile 10 to move to the corresponding power supply interface, or to make the power supply input interface 11 automatically telescope to the corresponding power supply interface. The trigger member 40 may be a device that can emit a corresponding trigger signal, or may be an intermediate medium that generates a corresponding trigger signal. For example, the trigger member 40 can adopt a mechanical switch, which is connected to the charging pile 10 in a wired manner. At this time, the trigger member 40 can be manually controlled to close or open, so that it can output a corresponding trigger signal to the charging pile 10. The trigger member 40 can also adopt a detection sensor, which is connected to the charging pile 10 in a wireless manner. At this time, the detection sensor can be used to automatically detect whether there is a vehicle parked in the parking space, so as to output a corresponding trigger signal to the charging pile 10. The trigger member 40 can also be a QR code, a radio frequency tag, etc. that stores position information, as an intermediate medium for generating a trigger signal. At this time, the user scans and identifies the trigger member 40 through a mobile phone, and sends a corresponding trigger signal to the charging pile 10.

It can be understood that the trigger signal includes position information. After receiving the trigger signal, the charging pile 10 can, based on signal analysis, determine the target parking space, that is, the fixed parking space corresponding to the trigger member 40 that sends the trigger signal with charging demand, and then automatically move to the corresponding target power supply interface, or control its own power supply input interface 11 to telescope to the target power supply interface to perform subsequent vehicle charging.

This embodiment can, through the provision of a plurality of trigger members 40, make the charging pile 10 automatically move to the target power supply interface, or control its own power supply input interface 11 to telescope to the target power supply interface, making the charging process more convenient.

In some embodiments of the present application, the trigger member 40 is a parking space information identifier that includes parking space information, the charging pile 10 is also communicatively connected to a terminal device, the terminal device is configured to acquire the parking space information based on the parking space information identifier, and the charging pile 10 is further configured to automatically move to the target power supply interface based on the parking space information of the target parking space sent by the terminal device; or, the charging pile 10 is further configured to control its own power supply input interface 11 to telescope to the target power supply interface based on the parking space information of the target parking space sent by the terminal device.

Specifically, the parking space information identifier is a carrier for storing the parking space information, such as a barcode, a QR code, a radio frequency tag. The terminal device is a device terminal that can identify the parking space information identifier, such as a mobile phone equipped with a target APP (Application, mobile phone software).

Taking the parking space information identifier being a QR code as an example, assuming that the user parks the vehicle in a fixed parking space with serial number O2, the user scans and identifies the QR code of parking space 02 through a mobile phone, obtains the parking space information stored in the QR code, i.e., serial number 02, and generates a trigger signal based on the parking space information and sends it to the charging pile 10. The charging pile 10 receives the trigger signal to wake up, and analyzes the received trigger signal to acquire the parking space information, i.e., serial number 02. Then, the charging pile 10 can automatically move to the power supply interface 20 of the parking space 02, or control its own power supply input interface 11 to automatically telescope to the power supply interface 20 of the parking space 02. Then, the user connects the power supply input interface 11 of the charging pile 10 to the power supply interface 20 of the parking space 02, and connects the charging gun of the charging pile 10 to the charging port of the vehicle to charge the vehicle through the electric energy output by the power supply source 200.

Thus, the parking space information of the target parking space is obtained by identifying the parking space information identifier of the target parking space through the terminal device, and the parking space information of the target parking space is sent to the charging pile based on wireless communication. The charging pile 10 can automatically move to the target power supply interface of the target parking space according to the received parking space information of the target parking space, or control its own power supply input interface 11 to automatically telescope to the target power supply interface, making the charging process more convenient.

In some embodiments of the present application, the trigger member 40 is a parking space switch, the parking space switch is connected to the charging pile 10, and the charging pile 10 is further configured to automatically move to the target power supply interface when the state of the parking space switch corresponding to the target parking space is the target state; or, the charging pile 10 is further configured to control its own power supply input interface 11 to telescope to the target power supply interface when the state of the parking space switch corresponding to the target parking space is the target state.

Specifically, the parking space switch may be a mechanical switch or an electronic switch, and the parking space switch may be disposed at a pile position or at a parking space. The connection between the parking space switch and the charging pile 10 can be wireless or wired. For example, when the parking space switch is a mechanical switch, the mechanical switch is arranged on one side of the corresponding parking space, and the user controls the opening or closing of the mechanical switch. At this time, the state of the mechanical switch is transmitted to the charging pile 10 in a wired manner. When the parking space switch is an infrared sensor, the infrared sensor can be arranged on one side of the corresponding parking space, and the infrared sensor is used to automatically identify whether a vehicle is parked in the corresponding parking space. At this time, it is sent to the charging pile 10 in a wired or wireless manner. When the parking space switch is a pressure sensor, the pressure sensor is arranged in a fixed parking space, and pressure is detected to determine whether a vehicle has entered. At this time, it can be transmitted to the charging pile 10 in a wired or wireless manner.

The target state is used to indicate that there is a need for charging at the corresponding position. For example, when the parking space switch is a mechanical switch, the closed state of the mechanical switch is the target state. After the mechanical switch is pressed, the target state is transmitted to the charging pile 10 in a wired manner.

When the charging pile 10 identifies that the state of the parking space switch is the target state, it takes the fixed parking space corresponding to the parking space switch in the target state as the target parking space, and automatically moves to the target power supply interface corresponding to the target parking space, or controls its own power supply input interface 11 to telescope to the target power supply interface, making the charging process more convenient.

In some embodiments of the present application, the parking space switch includes at least one of a mechanical switch, a pressure sensor, and an infrared sensor.

Specifically, the parking space switch of each fixed parking space may adopt one or more of a mechanical switch, a pressure sensor and an infrared sensor. Exemplarily, the parking space switch adopts a combination of a mechanical switch and an infrared sensor. When the user parks the vehicle correctly in parking space 02, the infrared sensor of parking space 02 detects that a vehicle is parked. At the same time, the user presses the mechanical switch of parking space 02. The charging pile determines that the parking space switch of parking space 02 is in the target state based on the infrared detection result and the closed state of the mechanical switch of parking space 02. It then automatically moves to the power supply interface of parking space 02, or controls its own power supply input interface 11 to telescope to the target power supply interface, so as to charge the vehicle at parking space 02. In this way, when the charging pile 10 identifies that the state of the parking space switch is the target state, it determines the target parking space based on the parking space switch, and automatically moves to the target power supply interface corresponding to the target parking space, or controls its own power supply input interface 11 to telescope to the target power supply interface, making the charging process more convenient.

In some embodiments of the present application, as shown in Fig. 4, the charging pile 10 is also provided with a sensing apparatus 13 and a moving apparatus 14, and the charging pile 10 is further configured to control the moving apparatus 14 to automatically move to the target power supply interface based on the surrounding environment information sensed by the sensing apparatus 13; or, the charging pile 10 is also provided with a sensing apparatus 13 and a telescopic apparatus, and the charging pile 10 is further configured to, based on the surrounding environment information sensed by the sensing apparatus 13, control the telescopic apparatus to drive the power supply input interface 11 to telescope to the target power supply interface.

Specifically, the sensing apparatus 13 is used to detect surrounding environment information, such as whether there are obstacles in the forward direction, current position information, whether the target position has been reached, etc. The sensing apparatus 13 includes radar, position sensor, scanning and recognition apparatus, etc. The sensing apparatus 13 can determine the moving route based on the identified surrounding environment information to control the moving apparatus 14 to move, or control the telescopic apparatus to drive the power supply input interface 11 to telescope and determine whether the target power supply input interface is reached. The moving apparatus 14 may include a control unit, a driving motor, and moving parts such as rollers installed on the charging pile 10. The telescopic apparatus may also include a control unit, a driving motor, and a moving part installed on the power supply input interface 11 to drive the power supply input interface 11 to move and realize the extension or retraction of the power supply input interface 11. The specific structure can be applied according to actual conditions.

In addition, the charging pile 10 may or may not adopt a guide rail structure. Exemplarily, when a guide rail structure is adopted, the sensing apparatus 13 can identify the surrounding environment information by identifying the position identifier on the guide rail structure, and control the moving apparatus 14 or the telescopic apparatus to move along the guide rail. The moving apparatus 14 or the telescopic apparatus may include a bottom detent matched with the guide rail; when a guide rail structure is not adopted, the sensing apparatus 13 can identify the surrounding environment information through the identification information arranged in the surrounding area to determine whether the target position has been reached, and then control the moving apparatus 14 or the telescopic apparatus to move.

In this embodiment, the charging pile 10 automatically moves to the target power supply interface through the sensing apparatus 13 and the moving apparatus 14, or the power supply input interface 11 is automatically telescoped to the target power supply interface based on the sensing apparatus 13 and the telescopic apparatus, making the charging process more convenient and reducing manual participation.

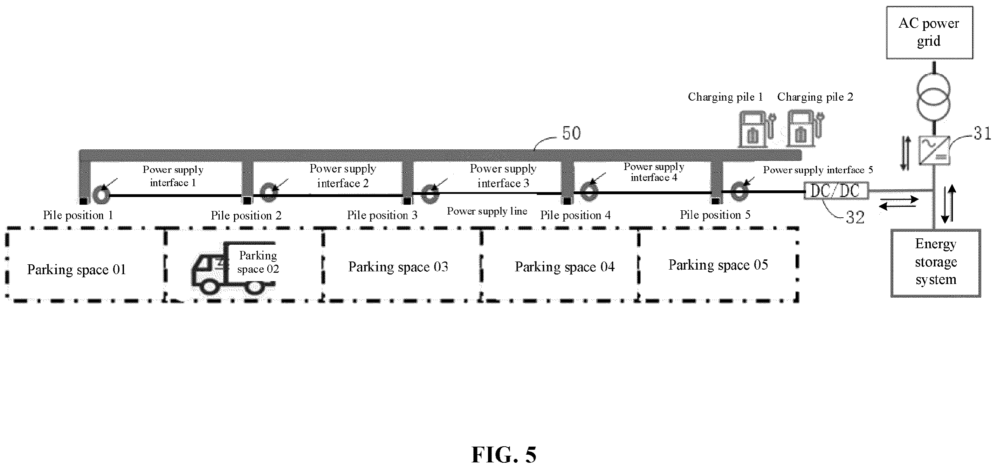

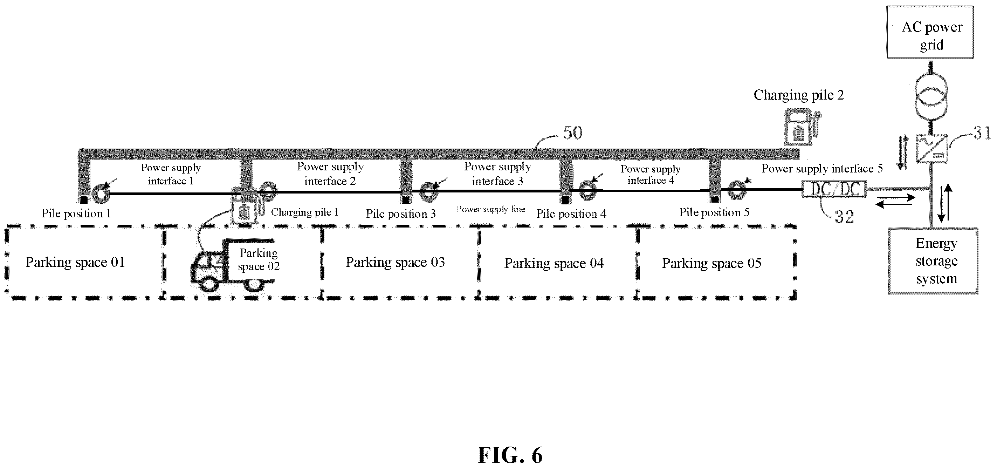

In some embodiments of the present application, as shown in Figs. 5 and 6, the charging system 100 further comprises: a moving route identifier 50, a plurality of pile position identifiers are provided on the moving route identifier 50, and the plurality of pile position identifiers are arranged in one-to-one correspondence with the plurality of power supply interfaces 20, and the charging pile 10 is further configured to control the moving apparatus 14 to automatically move to the target pile position identifier corresponding to the target power supply interface based on the surrounding environment information sensed by the sensing apparatus 13; or, the charging pile 10 is further configured to control the telescopic apparatus to drive the power supply input interface 11 to telescope to the target pile position identifier corresponding to the target power supply interface based on the surrounding environment information sensed by the sensing apparatus 13.

Specifically, the moving route identifier 50 is used to identify the moving path of the charging pile 10, so that the charging pile 10 or the power supply input interface 11 of the charging pile 10 moves along the moving route identifier 50. The pile position identifier is used to identify the stop position of the charging pile 10 in each fixed parking space. The pile position identifier, the power supply interface 20 and the fixed parking space correspond one to one. When the charging pile 10 moves to the target power supply interface, the charging pile 10 stops at the parking position, that is, the pile position identifier corresponding to the target power supply interface; or when the power supply input interface 11 of the charging pile 10 moves to the target power supply interface, the power supply input interface 11 stops at the stop position, that is, the pile position identifier corresponding to the target power supply interface.

Exemplarily, there are five fixed parking spaces, namely parking space 01, parking space 02, parking space 03, parking space 04 and parking space 05. Five power supply interfaces 20 are respectively provided corresponding to the five fixed parking spaces, namely power supply interface 1, power supply interface 2, power supply interface 3, power supply interface 4 and power supply interface 5. The moving route mark 50 is provided with five pile position identifiers corresponding to the five power supply interfaces 20, which are pile position 1, pile position 2, pile position 3, pile position 4 and pile position 5 respectively. When there is no demand for charging, that is, when no vehicle is parked in any of the five parking spaces, the charging pile 10 stops at a preset position; when there is a demand for charging, the charging pile 10 can move to the target position based on the trigger signal. For example, when a vehicle is parked at parking space 02 as determined by the parking space switch and the vehicle requires charging, the charging pile 10 moves along the moving route marker 50, and when pile position 2 is identified by the sensing apparatus 13, the moving apparatus 14 is controlled to stop the charging pile 10 at pile position 2. The user connects the power supply input interface 11 of the charging pile 10 to the power supply interface 2, and the charging gun of the charging pile 10 is connected to the charging port of the vehicle to charge the vehicle.

In this embodiment, the charging pile 10 can, based on the moving route mark 50, automatically move to the target position or control its own power supply input interface 11 to automatically telescope to the target position without laying guide rails, which is not only fast but also cost-effective.

In some embodiments of the present application, the number of the charging piles 10 is greater than 1 and less than the number of the plurality of fixed parking spaces.

When there are a plurality of charging piles 10, the triggering and wakeup sequence of the plurality of charging piles 10 can be set in advance. The charging piles 10 are waked up according to the preset triggering sequence and moved to the target position to perform the charging process. For example, the preset serial number can be used as the triggering sequence.

In this embodiment, a plurality of vehicles can be charged at the same time through a plurality of charging piles 10, meeting the demand of charging a plurality of vehicles at the same time.

As a specific embodiment of the present application, as shown in Figs. 4 and 5, the charging system 100 includes two mobile charging piles, represented by charging pile 1 and charging pile 2 respectively; there are five fixed parking spaces, represented by parking space 01, parking space 02, parking space 03, parking space 04, and parking space 05 respectively, and a corresponding QR code is set for each fixed parking space as a position identification code; a power supply interface is set near each parking space, represented by power supply interface 1, power supply interface 2, power supply interface 3, power supply interface 4 and power supply interface 5 respectively, and the five power supply interfaces are connected to the AC power grid and the energy storage system through the power supply apparatus 30. In the power supply apparatus 30, the first power charging unit 31 is a bidirectional AC/DC conversion unit, and the second power charging unit 32 is a bidirectional DC/DC conversion unit, and the specific connection is shown in the figure. Two charging piles are provided in the charging system 100, namely charging pile 1 and charging pile 2. The charging piles can move autonomously according to a preset program, and users can trigger the charging piles to move to the corresponding positions by scanning the QR code of the corresponding parking space.

Specifically, when there is no vehicle being charged, as shown in Fig. 4, the charging pile 1 and the charging pile 2 stop at fixed standby positions. When there is a need for charging, as shown in Fig. 5, the user parks the vehicle to be charged in parking space 02, and obtains the parking space information corresponding to parking space 02 by scanning the QR code corresponding to parking space 02 with a mobile phone, and generates trigger information based on the parking space information corresponding to parking space 02 and sends it to the charging pile. Charging pile 1 is waked up based on the trigger signal, and identifies the trigger information to determine that the target position is pile position 2, and automatically moves to pile position 2 through the sensing apparatus 13 and the moving apparatus 14. Then the user inserts the power supply input interface of charging pile 1 into the power supply interface 2, and connects the charging gun of charging pile 1 to the charging port of the vehicle to start charging the vehicle. During the charging process, the power supply apparatus 30 acquires the vehicle power demand and the number of vehicles connected for charging being 1 based on communication, and allocates the power of the current energy storage system and the AC power grid according to the vehicle power demand and the number of vehicles connected for charging until charging is completed. Charging pile 1 automatically returns to the standby position.

When charging pile 1 is charging, if another vehicle to be charged parks at parking space 03, the owner of the vehicle obtains the parking space information corresponding to parking space 03 by scanning the QR code corresponding to parking space 03 through the mobile phone, and generates trigger information based on the parking space information corresponding to parking space 03 and sends it to the charging pile. Since charging pile 1 is charging, charging pile 2 is waked up based on the trigger signal, and identifies the trigger information to determine that the target position is pile position 3. Charging pile 2 moves to pile position 3 through its own sensing apparatus 13 and moving apparatus 14 to charge the vehicle at parking space 03. During the charging process, the power supply apparatus 30 acquires the vehicle power demand and the number of vehicles connected for charging being 2 based on communication, and allocates the power of the current energy storage system and the AC power grid according to the vehicle power demand and the number of vehicles connected for charging until charging is completed. Charging pile 2 automatically returns to the standby position.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: It is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A charging system for providing charging service to a plurality of fixed parking spaces, comprising:
a charging pile, provided with a power supply input interface;
a plurality of power supply interfaces, arranged in one-to-one correspondence with the plurality of fixed parking spaces; and
a power supply apparatus, connected to the plurality of power supply interfaces and a plurality of power supply sources, and configured to output charging electric energy to the plurality of power supply interfaces based on electric energy of the plurality of power supply sources,
wherein when the charging pile moves to a target power supply interface and the power supply input interface of the charging pile is connected to the target power supply interface, or when the power supply input interface of the charging pile telescopes to the target power supply interface and is connected to the target power supply interface, the charging pile charges a vehicle in a target parking space corresponding to the target power supply interface based on the charging electric energy.

2. The charging system according to claim 1, wherein the plurality of power supply sources include at least two of an AC power grid, an energy storage system, and a new energy power generation system.

3. The charging system according to claim 2, wherein when the plurality of power supply sources include the AC power grid, the energy storage system and the new energy power generation system, the power supply apparatus comprises:
a first power conversion unit, one end of the first power conversion unit connected to the AC power grid; and
a second power conversion unit, one end of the second power conversion unit connected to the other end of the first power conversion unit, the energy storage system and the new energy power generation system, and the other end of the second power conversion unit connected to the plurality of power supply interfaces, wherein the charging electric energy is output through the first power conversion unit and the second power conversion unit based on the electric energy of the AC power grid, the energy storage system and the new energy power generation system.

4. The charging system according to claim 3, wherein the first power conversion unit is a unidirectional ACDC conversion unit or a bidirectional ACDC conversion unit; and/or the second power conversion unit is a unidirectional DCDC conversion unit or a bidirectional DCDC conversion unit.

5. The charging system according to any one of claims 1 to 4, wherein the power supply input interface and the power supply interface are connected in a plug-in manner.

6. The charging system according to claim 5, wherein the power supply input interface is a plug and the power supply interface is a socket; or the power supply input interface is a socket and the power supply interface is a plug.

7. The charging system according to any one of claims 1 to 4, wherein the system further comprises:
a plurality of trigger members, wherein the plurality of trigger members are arranged in one-to-one correspondence with the plurality of fixed parking spaces, and the plurality of trigger members are configured to trigger the charging piles to move to their respective corresponding power supply interfaces; or configured to trigger the power supply input interfaces of the charging piles to telescope to their respective corresponding power supply interfaces.

8. The charging system according to claim 7, wherein the trigger member is a parking space information identifier that includes parking space information, the charging pile is also in communication with a terminal device, the terminal device is configured to acquire the parking space information based on the parking space information identifier, and the charging pile is further configured to automatically move to the target power supply interface based on the parking space information of the target parking space sent by the terminal device; or the charging pile is further configured to control its power supply input interface to telescope to the target power supply interface based on the parking space information of the target parking space sent by the terminal device.

9. The charging system according to claim 8, wherein the parking space information identifier is a barcode or a QR code.

10. The charging system according to claim 7, wherein the trigger member is a parking space switch, the parking space switch is connected to the charging pile, and the charging pile is further configured to automatically move to the target power supply interface when the state of the parking space switch corresponding to the target parking space is the target state; or the charging pile is further configured to control its power supply input interface to telescope to the target power supply interface when the state of the parking space switch corresponding to the target parking space is the target state.

11. The charging system according to claim 10, wherein the parking space switch includes at least one of a mechanical switch, a pressure sensor and an infrared sensor.

12. The charging system according to any one of claims 1 to 4, wherein the charging pile is further provided with a sensing apparatus and a moving apparatus, and the charging pile is further configured to, based on surrounding environment information sensed by the sensing apparatus, control the moving apparatus to automatically move to the target power supply interface; or the charging pile is further provided with a sensing apparatus and a telescopic apparatus, and the charging pile is further configured to, based on surrounding environment information sensed by the sensing apparatus, control the telescopic apparatus to drive the power supply input interface to telescope to the target power supply interface.

13. The charging system according to claim 12, wherein the system further comprises:
a moving route identifier, wherein a plurality of pile position identifiers are provided on the moving route identifier, the plurality of pile position identifiers are arranged in one-to-one correspondence with the plurality of power supply interfaces, and the charging pile is further configured to control the moving apparatus to automatically move to a target pile position identifier corresponding to the target power supply interface based on the surrounding environment information sensed by the sensing apparatus; or the charging pile is further configured to control the telescopic apparatus to drive the power supply input interface to telescope to the target pile position identifier corresponding to the target power supply interface based on the surrounding environment information sensed by the sensing apparatus.

14. The charging system according to any one of claims 1 to 4, wherein the number of the charging piles is greater than 1 and less than the number of the plurality of fixed parking spaces.
